# EUROPEAN PATENT APPLICATION

(11) **EP 4 071 466 A1**
(43) Date of publication of application: **12.10.2022**
(21) Application number: 21382300.8
(22) Date of filing: 08.04.2021
(51) Int. Cl.: G01N 27/414, B82Y 15/00

(54) **MIXED FUNCTIONALIZED GRAPHENE STRUCTURE AND CORRESPONDING FIELD-EFFECT TRANSISTOR BIOSENSOR**

(71) Applicant: AttenBio S.L., 20014 Donostia-San Sebastián (ES)
(72) Inventor: Rebollo Piñeiro, Amaia, 20014 Donostia-San Sebastián (ES); Arrastua Ceberio, María, 20014 Donostia-San Sebastián (ES)
(74) Representative: Balder IP Law, S.L.

(57) **Abstract**

The present invention relates a functionalized graphene structure comprising a graphene surface; 1-pyrenebutanoic acid succinimidyl ester (PBASE) molecules; molecules of at least one type of polycyclic aromatic hydrocarbon (PAH) compounds; and biomolecules; wherein both the molecules of PBASE and the molecules of at least one type of PAH compounds are non-covalently linked to the graphene surface, and wherein the biomolecules are linked to the PBASE molecules. The present invention relates also to a method for preparing said functionalized graphene structure, to a functionalized graphene structure obtainable by said method. Finally, the present invention relates to a Field-Effect Transistor (FET) biosensor comprising said functionalized graphene structure, to an electronic device for biological sample analysis comprising said biosensor, to a method for electronic biological sample analysis by using said device and to the use of the functionalized graphene structure as component in FET biosensors.

## Description

### TECHNICAL FIELD OF THE INVENTION

The present invention relates to a functionalized graphene structure as well as the method for preparing it and to its use. Additionally, the present invention relates to a biosensor comprising said functionalized graphene structure and to a method for electronic analysis of biological samples.

### BACKGROUND OF THE INVENTION

The immobilization of biomolecules on a surface is a key factor in the functionalization process for the development of biosensors. The orientation is very critical for a good recognition event with the target molecule, and the specific orientation of immobilized biomolecules is not easily achieved. However, it is essential to immobilize biomolecules on surfaces without altering their binding activity, specificity and chemical structure.

Different strategies for immobilization may result in specific or random orientation of the biomolecules. The orientation on shelf-organizing capacity of the biomolecules may be steered by specific reactive groups on the surface, on biomolecules or on both.

Graphene Field Effect Transistors (GFETs) are transistors based on graphene and work based on the modulation of the graphene channel conductance between the source and the drain upon the application of an external electric field through the gate electrode. This graphene channel has revolutionary sensitivity thanks to the thickness of only one atom, which can be exploited on a wide variety of applications such as biosensing (Y. M. Lei et al., Biosens. Bioelectron. 2017, 91, 1-7; L. Zhou et al., Biosens. Bioelectron. 2017, 87, 701-707).

Graphene is a two-dimensional material, mono-atomic, planar network of sp²-bonded carbon atoms arranged in a honeycomb lattice. However, its chemical stability, biocompatibility, significant surface-to-volume ratio and field effect make this material very attractive for biosensing applications ("Biocompatible graphene for bioanalytical applications". Y. Hu et al. Springer, 2015). This significant surface-to-volume ratio plays a key role for chemical immobilization of biomolecules onto its surface via covalent or non-covalent functionalization procedures.

The covalent functionalization results in stable products, but involves the saturation of some of the double bonds affecting the electronic properties of graphene (WO 2008/097343A2 A2).

The non-covalent functionalization allows its solubilization while preserving the structural and electronic features (N. Kozhemyakina et al., Advanced Mater. 2010, 22, 5483-7). PBASE molecules are commonly used as a conventional method to functionalize graphene as non-covalent method, and it is widely studied in many publications (e.g., US 2017/0081195 A1).

This chemical modification of graphene with different electroactive molecules through non-covalent interactions, specifically π-π stacking, is widely investigated due to the preservation of the π-conjugated system of graphene. For that reason, it is not strange that a vast majority of the examples related with the non-covalent functionalization of graphene employ planar aromatic molecules and their derivatives. For instance, pyrene derivatives are known to feature strong affinities towards the graphene basal plane via π-π stacking (US 2014/0147938 A1).

In spite of the above-discussed functionalization methods, there remains a need for more controlled and efficient means of preparing chemically modified graphene surface, whilst simultaneously preserving its interesting and desirable properties for exploitation in biosensor applications.

### BRIEF DESCRIPTION OF THE INVENTION

The inventors of the present invention have developed a mixed functionalization of graphene that causes a better interaction of biomolecules to the functionalized graphene surface.

In particular, in a first aspect, the present invention refers to a functionalized graphene structure comprising:
- a graphene surface;
- 1-pyrenebutanoic acid succinimidyl ester (PBASE) molecules;
- molecules of at least one type of polycyclic aromatic hydrocarbon (PAH) compounds; and
- biomolecules;
wherein both the molecules of PBASE and the molecules of at least one type of PAH compounds are non-covalently linked to the graphene surface, and wherein the biomolecules are linked to the PBASE molecules.

This mixed non-covalent functionalization of graphene results in a specific packing wherein the PAH molecules establish π-π stacking with graphene surface and PBASE molecules are more packed and organized to biomolecules which will react covalently with the ester groups of PBASE molecules.

A second aspect of the present invention refers to method for preparing the functionalized graphene structure as defined herein, characterized in that it comprises the following steps:
a) incubating the PBASE molecules and the molecules of at least one type of polycyclic aromatic hydrocarbon (PAH) compounds over the graphene surface and washing the resulting graphene structure; and
b) incubating the biomolecules over the graphene surface of the graphene structure resulting from the previous step and washing the resulting functionalized graphene structure.

The method as described above allows a more controlled and efficient means of preparing chemically modified graphene surfaces.

Another aspect of the present invention relates to a functionalized graphene structure obtainable by the method as described herein.

The chemical functionalization of graphene surface is improved by the method as described above. As a result, the biomolecules adopt favourable distance and conformation at their binding sites which are more suitable for their target recognition in biosensors.

A further aspect of the present invention relates to a Field-Effect Transistor (FET) biosensor, wherein said FET biosensor comprises a functionalized graphene structure as defined herein.

Another aspect of the present invention relates to an electronic device for biological sample analysis, characterized in that it comprises a FET biosensor as defined herein.

Another aspect of the present invention relates to a method for electronic biological sample analysis, comprising:
a) introducing a biological sample to be analyzed in a device as defined herein to bring the biological sample in contact with the functionalized graphene structure comprised in said device;
b) applying a voltage to the device; and
c) detecting a change of the conductive properties of the functionalized graphene structure resulting in a change of the electric signal of the said device.

A final aspect of the present invention relates to the use of the functionalized graphene structure as described herein as a component in FET biosensors.

These and other aspects of the invention will be apparent from and elucidated with reference to the embodiments described hereinafter.

### BRIEF DESCRIPTION OF THE DRAWINGS

To better understand the invention, its objects and advantages, the following figures are attached to the specification in which the following is depicted:
Figure 1. Schematic representation of non-covalent mixed functionalization of graphene surface and follow biofunctionalization with biomolecules (antibodies in this case) on a graphene transistor.
Figure 2. AFM images of (a) bare substrate, 10 x 10 µm² area, and (b) chip n° 10, 10 x 10 µm² area, of Table 2.
Figure 3. AFM images of (a) chip n° 11, 10 x 10 µm² area, and (b) chip n° 12, 10 x 10 µm² area, of Table 2.
Figure 4. AFM images of (a) chip n° 13, 10 x 10 µm² area, and (b) chip n° 1, 10 x 10 µm² area, of Table 2.
Figure 5. AFM images of chip n° 2, 10 x 10 µm² area, of Table 2.

### DETAILED DESCRIPTION OF THE INVENTION

Unless defined otherwise, all technical and scientific terms used herein have the same meaning as commonly understood to one of ordinary skill in the art to which this disclosure belongs.

### Functionalized graphene structure

It is an object of the present invention to provide a functionalized graphene structure, wherein biomolecules present a more suitable orientation and conformation for their target recognition.

In particular, the functionalized graphene structure of the present invention comprises a graphene surface.

The term "graphene" will be understood to refer to a particular crystalline allotrope of carbon consisting of a single layer of atoms arranged in a two-dimensional honeycomb lattice and wherein each carbon atom is connected to three adjacent carbon atoms (sp² hybridization), so as to define a one atom thick planar sheet of carbon.

For the avoidance of doubt, the term graphene used herein does not encompass graphene oxide.

Therefore, in the present invention, the term "graphene structure" will be understood to refer to a two-dimensional carbon structure with up to ten graphene layers, wherein each layer (or sheet) of carbon is one atom thick.

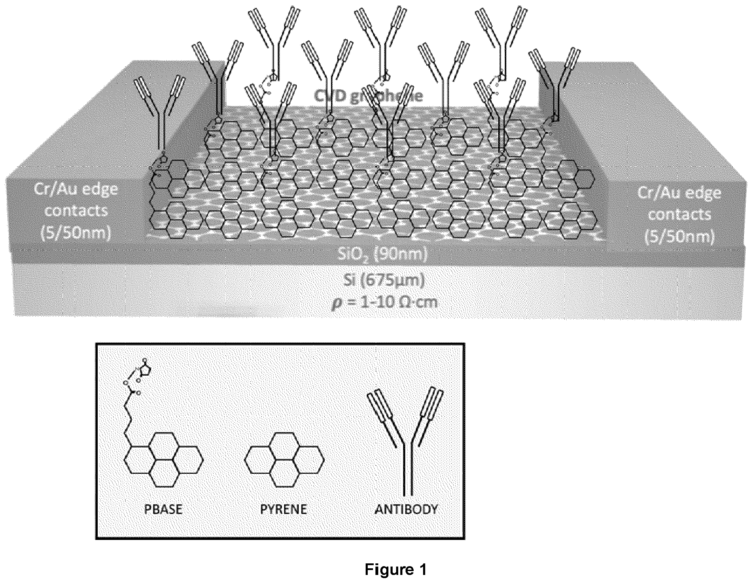

In a particular embodiment, the term "graphene structure" refers to a graphene layer supported in a chip made of an insulator material such as silicon dioxide, by using, for example, chemical vapour deposition (CVD). Then, the graphene surface in the graphene structure is functionalized as it is described herein, in order to obtain the functionalized graphene structure of the present invention. A non-limiting example of a functionalized graphene structure according to the present invention is shown in Figure 1.

A functionalized graphene structure as described herein further comprises 1-pyrenebutanoic acid succinimidyl ester (PBASE) molecules and molecules of at least one type of polycyclic aromatic hydrocarbon (PAH) compounds; wherein both the molecules of PBASE and the molecules of at least one type of PAH compounds are non-covalently linked to the graphene surface.

The 1-pyrenebutanoic acid succinimidyl ester (PBASE) is a heterobifunctional linker that contains on one hand a pyrene group, that stacks with graphene by π-π stacking, creating a non-covalent monolayer on graphene surface with a high surface coverage and, furthermore, an N-hydroxysuccinimide (NHS) ester group, that reacts with primary amines present on a plurality of biomolecules.

The polycyclic aromatic hydrocarbon (PAH) compounds, also known as polyaromatic hydrocarbons or polynuclear aromatic hydrocarbons, are chemical compounds containing only carbon and hydrogen and composed of multiple aromatic rings. The simplest of such chemicals are naphthalene, having two aromatic rings, and the threering compounds anthracene and phenanthrene. PAH compounds molecules establish π-π stacking with graphene surface.

In a particular embodiment, the functionalized graphene structure comprises molecules of at least one type of PAH compound having at least four aromatic rings, more particularly the molecules of at least one type of PAH compounds are selected from the group consisting of pyrene, anthracene, chrysene, corannulene, naphthalene, phenanthrene, triphenylene, benzopyrene, coronene, tetracene, pentacene, ovalene and mixtures thereof.

In another particular embodiment, the molecules of PAH compounds are of one type, more particularly the molecules of PAH compounds are molecules of pyrene.

In yet another particular embodiment, the molar ratio between the PBASE and the at least one type of PAH compounds in the functionalized graphene structure as described herein is between 2:5 and 5:2.

This mixed non-covalent functionalization of graphene results in a specific packing, wherein the PAH molecules establish π-π stacking with graphene surface, and PBASE molecules are more packed and organized to biomolecules, which will react covalently with the ester groups of PBASE molecules.

Thus, a functionalized graphene structure as described herein further comprises biomolecules, wherein the biomolecules are covalently linked to the PBASE molecules with the ester groups.

In a functionalized graphene structure as described herein, the biomolecules are linked through the ester groups of PBASE molecules. The inventors of the present invention have observed that biomolecules adopt vertical orientations at their binding sites which are more suitable conformations for their target recognition (such as pathogens) in biosensors.

In the context of the present invention, the term "biomolecules" refer to the recognition component in a biosensor, often called a bioreceptor, and includes biomolecules from organisms, but also receptors modelled after biological systems to interact with the analyte of interest.

Non-limiting examples of suitable biomolecules for the functionalized graphene structure as described herein are antibodies, aptamers, oligonucleotides and enzymes.

In a particular embodiment, the biomolecules comprised in a functionalized graphene structure as described herein are antibodies.

A non-limiting example of a suitable antibody for the functionalized graphene structure as described herein is SARS-CoV-2 spike antibody.

Without being bound to any theory in particular, it is believed that the mixed coverage of the functionalized graphene structure as described herein causes a better interaction of biomolecules to the graphene surface by avoiding non-desirable interactions between graphene and the biomolecules (that decrease the adsorptive capacity) by the presence of pyrene groups of the PAH molecules. As a result, the biomolecules covalently bond to the ester groups of PBASE molecules with a favourable distance and conformation for their target recognition in biosensors.

### Method for preparing the functionalized graphene structure

Another aspect of the present invention is a method for preparing a functionalized graphene structure described herein.

In particular, the method of the present invention comprises a step (a) of incubating the PBASE molecules and the molecules of at least one type of PAH compounds over the graphene surface and washing the resulting functionalized graphene structure.

The PBASE molecules incubation is performed by well-known methods as described, for example, in: G. Wu et al., "Graphene field-effect transistors-based biosensors for Escherichia coli detection," 2016 IEEE 16th International Conference on Nanotechnology (IEEE-NANO), Sendai, Japan, 2016, 22-25; in Y. Ohno et al., "Labelfree aptamer-based immunoglobulin sensors using graphene field-effect transistors," Japanese Journal of Applied Physics 2011, 50, 070120; and in G. Seo et al., "Rapid detection of COVID-19 causative virus (SARS-CoV-2) in human nasopharyngeal swab specimens using field-effect transistor- based biosensor," ACS Nano 2020, 14, 5135-5142. For example, a graphene structure is soaked in a PBASE solution in methanol for 1 h at room temperature and then rinsed several times with a phosphate-buffered saline solution and deionized water. A skilled person knows how these steps are to be performed so no further elucidations are needed.

The PAH compound molecules incubation can be performed by the same methods as explained above for PBASE molecules incubation. Thus, for example, a graphene structure is soaked in a pyrene solution in methanol for 1 h at room temperature and then rinsed several times with a phosphate-buffered saline solution and deionized water.

In a preferred embodiment, methanol is used as solvent to soak the molecules during incubation, in order to avoid chemical reactions that could damage the graphene surface.

Washing should be performed after every incubation step. Preferably, washing is performed several times after every incubation step. In addition, washing is preferably performed using the same solvent as the one used for soaking the molecules during incubation, more preferably the solvent is methanol.

In a particular embodiment, the PBASE molecules and the molecules of the molecules of at least one type of PAH compounds in step (a) are incubated simultaneously over the graphene surface. This simultaneous methodology allows to avoid crosscontamination between solvents used to dissolve and wash the PAH compounds molecules and the PBASE molecules in each incubation step in case of sequential incubation.

In another particular embodiment, the PBASE molecules and the molecules of at least one type of PAH compounds in step (a) are incubated sequentially over the graphene surface. The term "sequentially" refers to first incubating the PBASE molecules or the molecules of at least one type of PAH compound over the graphene surface, and afterwards washing the resulting functionalized graphene surface; and subsequently incubating the molecules of at least one type of PAH compound or the PBASE molecules, respectively, over the previously resulting graphene surface, and afterwards washing the resulting functionalized graphene surface.

In a more particular embodiment, in step (a), the PBASE molecules are first incubated over the graphene surface and subsequently the molecules of at least one type of PAH compound.

In another more particular embodiment, in step (a), the molecules of at least one type of PAH compounds are first incubated over the graphene surface and subsequently the PBASE molecules.

In another particular embodiment, the PBASE molecules are incubated at a concentration between 1.25 mM and 10 mM and, more preferably at a concentration of 2 mM.

In yet another particular embodiment, the molecules of at least one type of PHA compounds are incubated at a concentration between 0.1 mM and 5 mM and, more preferably at a concentration of 0.5 mM.

The method of the present invention further comprises a step (b) of incubating biomolecules over the graphene surface of the graphene structure resulting from the previous step, and washing the resulting functionalized graphene structure.

The biomolecules incubation can be performed by the same methods as explained above for PBASE molecules and PHA molecules incubation. Thus, for example, a functionalized graphene structure is exposed to a 100 µg/mL antibody solution for 4 h at room temperature and then rinsed several times with a phosphate-buffered saline solution and deionized water.

Another aspect of the present invention, is a functionalized graphene structure obtainable or obtained by a method as described herein.

The chemical functionalization of graphene surface is improved by the method as described herein. In particular, without being bound to any theory, it is believed that such an improvement may be due to the fact that the mixed non-covalent functionalization of graphene results in a specific packing wherein the PAH molecules establish π-π stacking with graphene surface and PBASE molecules are more packed and organized to biomolecules which will react covalently with the ester groups of PBASE molecules. As a result, the biomolecules adopt favourable distance and conformation at their binding sites which are more suitable for their target recognition (such as pathogens) in biosensors.

### Field-Effect Transistor (FET) biosensor

Another aspect of the present invention is directed to a field-effect transistor (FET) biosensor, wherein said biosensor comprises a functionalized graphene structure as described herein.

The term "field-effect transistor (FET)" refers to a type of transistor that uses an electric field to control the flow of current. FETs are devices with three terminals: source (S), gate (G), and drain (D). FETs control the flow of current by the application of a voltage to the gate, which in turn alters the conductivity between the drain and source.

A non-limiting example of a GFET according to the present invention is shown in Figure 1.

The term "Field-Effect Transistor (FET) biosensor" (also known as "biosensor field-effect transistor" (Bio-FET or BioFET)" or "field-effect biosensor" (FEB)) is a FET that consists of two main compartments: one is a bio-sensitive layer, that can specifically detect biomolecules, and the other is the FET. In the present invention, the bio-sensitive layer is a graphene channel (structure), inserted between the source and the drain of the FET. The graphene is exposed to enable functionalization of the channel surface and binding of receptor molecules to the channel surface. The surface of the graphene channel is functionalized by binding receptor molecules for the specific target of interest. The FET acts as a transducer separated by an insulating layer from the bio-sensitive layer comprising biological recognition elements (e.g., receptors or probe molecules), which are selective to the target molecule called analyte. Once the analyte binds to the recognition element, the charge distribution at the surface changes with a corresponding change in the electrostatic surface potential of the semiconductor (graphene). This change in the surface potential of the semiconductor acts like a gate voltage, changing the amount of current that can flow between the source (S) and drain (D) electrodes. This change in current (or conductance) can be measured, thus the binding of the analyte can be detected. The precise relationship between the current and analyte concentration depends on the region of transistor operation.

Thus, the FET biosensor of the present invention comprises a functionalized graphene structure as described herein. In particular, the FET biosensor of the present invention comprises a functionalized graphene structure as described herein, supported in an insulating layer, wherein the functionalized graphene structure supported in the insulating layer is bridging the two metal electrodes (S) and (D), and wherein the third electrode (G) is directly connected to the insulating layer.

In a particular embodiment, the functionalized graphene structure used for the FET biosensor described herein comprises itself the insulating material and a functionalized graphene layer supported in said insulating material. In this particular embodiment, the functionalized graphene structure can be used in the FET biosensor described herein in the form of a chip.

In the FET biosensor of the present invention, the two metal electrodes (S) and (D) are spacing each other. Any metal is appropriate for preparing the electrodes (S) and (D). Examples of suitable metal can include, but are not limited to, aluminium, chromium, titanium, gold, palladium and alloys thereof.

Furthermore, the gate (G) electrode in the FET biosensor of the present invention is preferably a silicon layer.

The insulating layer in the FET biosensor of the present invention is any suitable insulating material. Examples of suitable insulating materials include, but are not limited to, silicon dioxide, hafnium oxide and silicon nitrate.

In a particular embodiment, the FET biosensor of the present invention can comprise a plurality of functionalized graphene structures as described herein, supported on an insulating layer, each of them bridging two metal electrodes (S) and (D), and a third electrode (G) connected to the insulating layer.

As it has been explained above, the functionalized graphene structure as defined herein can be used in FET biosensors. Thus, another aspect of the present invention refers to the use of the functionalized graphene structure as described above as component in FET biosensors.

### Electronic device and method for biological sample analysis

Another aspect of the present invention is directed to an electronic device for biological sample analysis, characterized in that it comprises a biosensor as described above.

In particular, the electronic device for biological sample analysis described herein comprises a biosensor as described above, wherein the biosensor is electrically coupled to an external connector, the external connector configured to supply drain-source voltage, to supply gate-source bias, and to measure source current.

The electronic device for biological sample analysis described herein may further comprise a sample chamber to bring the biological sample in contact with the functionalized graphene structure, as biological sample sensor, comprised in said device. In a particular embodiment, the sample chamber comprises an aperture and the aperture contacts and forms a liquid-tight seal with the biological sample sensor, such that when a biological sample is introduced to the sample chamber, the biological sample contacts the top surface of the biological sample sensor.

In another particular embodiment, the electronic device for biological sample analysis described herein further comprises a casing, wherein the casing encapsulates the sample chamber and the biosensor.

Another aspect of the present invention is directed to a method for electronic biological sample analysis.

In particular, the method for electronic biological sample analysis described herein comprises a step (a) of introducing a biological sample to be analysed in a device as described above, to bring the biological sample in contact with the functionalized graphene structure comprised in said device.

In a particular embodiment, the biological sample to be analysed is introduced in a sample chamber as defined above to bring the biological sample in contact with the functionalized graphene structure comprised in the device.

The term "biological samples" refers to any material, including without limitation, blood, serum, fluid and tissue biopsy samples, collected from study subjects, and any tangible material directly or indirectly derived there from.

The method for electronic biological sample analysis described herein further comprises a step (b) of applying a voltage to the device.

In a particular embodiment, the voltage is applied to an external connector electrically coupled to the device, wherein the external connector configured to supply drain-source voltage, to supply gate-source bias, and to measure source current.

The method for electronic biological sample analysis described herein further comprises a strep (c) detecting a change of the conductive properties of the functionalized graphene structure, resulting in a change of the electric signal of the said device.

A skilled person knows how these steps are to be performed, so no further elucidations are needed.

All the features described in this specification (including the claims, description and drawings) and/or all the steps of the described method can be combined in any way, with the exception of combinations of such mutually exclusive features and/or steps.

The invention will be further illustrated by means of examples, which should not be interpreted as limiting the scope of the claims.

### EXAMPLES

### Preparation of PBASE/pyrene functionalized graphene chips

Graphene was transferred to a SiO₂/Si substrate using conventional wet-transfer methods. Poly(methyl methacrylate) (PMMA) was spin-coated at 500 rpm for 10 s and at 2500 rpm for 60s onto graphene on Cu foil. PMMA/graphene on Cu foil was etched in CE-100 copper etchant. After the Cu foil was etched, the PMMA/graphene layer were cleaned into a deionized water (DIW) bath, and the copper etchant was washed away. Subsequently, the PMMA/graphene layer was transferred to a SiO₂/Si substrate and dried under ambient conditions overnight. The PMMA layer was removed in an acetone bath for 2 h, followed by isopropyl alcohol washing and drying under a stream of N₂ gas.

The transferred graphene was patterned by optical lithography, etching and metallization.

The device dimensions were 100 × 100 µm² (L × W) and the contacts were passivated by a polymer coating.

PBASE (1-pyrenebutanoic acid succinimidyl ester) functionalization was performed by immersion. In particular, the fabricated graphene-based chip was positioned in a petri dish filled with PBASE dissolved in methanol. The chip was fully covered by the PBASE in methanol solution for 1 hour at room temperature. Afterwards it was washed in a 4 steps plan. Firstly, the chip was dipped 5 seconds in a petri dish filled with methanol, subsequently this step was repeated in a new petri dish due to refresh the methanol solution. Afterwards the chip was immersed in a new petri dish filled by 'new' methanol while agitation with a magnet for 10 minutes was done in order to agitate the liquid and get rid of the excess of unbound PBASE. To finish, the previous step was imitated but using DIW. In this way the excess of methanol and PBASE was eliminated. Next, the chip was dried with a N₂ gun.

The process used to incubate the graphene surface with pyrene is in principle the same as for PBASE molecules.

Table 1 shows functionalization of graphene-based chip performed at different concentrations of PBASE and pyrene and different methodology. In particular, there are 3 differentiated groups, in which the concentrations of PBASE and pyrene are 5mM and 2mM respectively in the first group, 2mM in both chemicals in the second group and 2mM PBASE and 5mM pyrene in the third group. "Dissolved together" in the methodology columns means that both, PBASE and pyrene were mixed in the same test tube once both solutions were previously dissolved separately. On the other hand, the wording "separately" in the methodology column refers to functionalizing both chemicals in independent incubation steps, that is why it is explained which of the two chemicals was added first. The incubation column gives supplementary information about the conditions in which the functionalization has been developed.

In order to understand the functionalization process, some control chips were carried out. In particular, there are 4 chips in which only PBASE or only pyrene was added in 5mM and 2mM concentrations (chips 10-13). Additionally, to this table a bare chip without any surface modification, nor with PBASE neither with pyrene was analyzed as another control chip (chip 14).

**Table 1. Functionalization of graphene-based chips.**

| **Chip N°** | **[PBASE]** | **[pyrene]** | **Methodology** | **Incubation** |
|---|---|---|---|---|
| 1 | 5mM | 2mM | Dissolved together | 1 h at room temperature |
| 2 | 5mM | 2mM | Separately (1st PBASE then pyrene) | 1h each separately in different Petri dishes at room temperature |
| 3 | 5mM | 2mM | Separately (1st pyrene then PBASE) | 1h each separately in different Petri dishes at room temperature |
| 4 | 2mM | 2mM | Dissolved together | 1 h at room temperature |
| 5 | 2mM | 2mM | Separately (1st PBASE then pyrene) | 1h each separately in different Petri dishes at room temperature |
| 6 | 2mM | 2mM | Separately (1st pyrene then PBASE) | 1h each separately in different Petri dishes at room temperature |
| 7 | 2mM | 5mM | Dissolved together | 1 h at room temperature |
| 8 | 2mM | 5mM | Separately (1st PBASE then pyrene) | 1h each separately in different Petri dishes at room temperature |
| 9 | 2mM | 5mM | Separately (1st pyrene then PBASE) | 1h each separately in different Petri dishes room temperature |
| 10 | 5mM | - | Only PBASE (CONTROL sample) | 1h at room temperature |
| 11 | 2mM | - | Only PBASE (CONTROL sample) | 1h at room temperature |
| 12 | - | 5mM | Only pyrene (CONTROL sample) | 1h at room temperature |
| 13 | - | 2mM | Only pyrene (CONTROL sample) | 1h at room temperature |
| 14 | - | - | Bare substrate (only graphene) | 1h at room temperature |

### AFM characterization

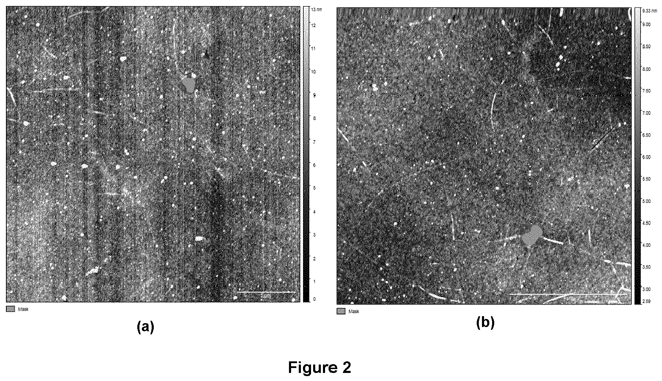

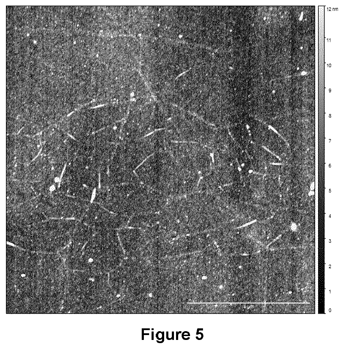

Surface roughness analysis of the previously prepared functionalized graphene-based chips were conducted by atomic force microscopy (AFM). Mapping images were analyzed from 10 × 10 µm² area and 2 × 2 µm² area of the graphene-based chips (Figures 2-5). See Table 2, wherein Ra is Average roughness and Rms is the root mean square roughness.

**Table 2. AFM analysis**

| **Chip N°** | **Functionalization type** | **10x10 µm²** | | **2x2 µm²** | |
|---|---|---|---|---|---|
| | | **Ra** | **Rms** | **Ra** | **Rms** |
| 14 | Bare substrate (only graphene) | 1,49 | 2,20 | 1,14 | 1,50 |
| 10 | Graphene + 5mM PBASE | 0,79 | 1,15 | 0,51 | 0,68 |
| 11 | Graphene + 2mM PBASE | 1,22 | 2,00 | 1,95 | 1,29 |
| 12 | Graphene + 5mM pyrene | 1,63 | 3,43 | 1,28 | 1,90 |
| 13 | Graphene + 2mM pyrene | 1,24 | 1,63 | 1,00 | 1,26 |
| 1 | Graphene + 5mM PBASE + 2mM pyrene | 1,74 | 3,65 | 1,45 | 3,17 |
| 2 | Graphene + 5mM PBASE + 2mM pyrene | 1,35 | 1,90 | 1,08 | 1,46 |

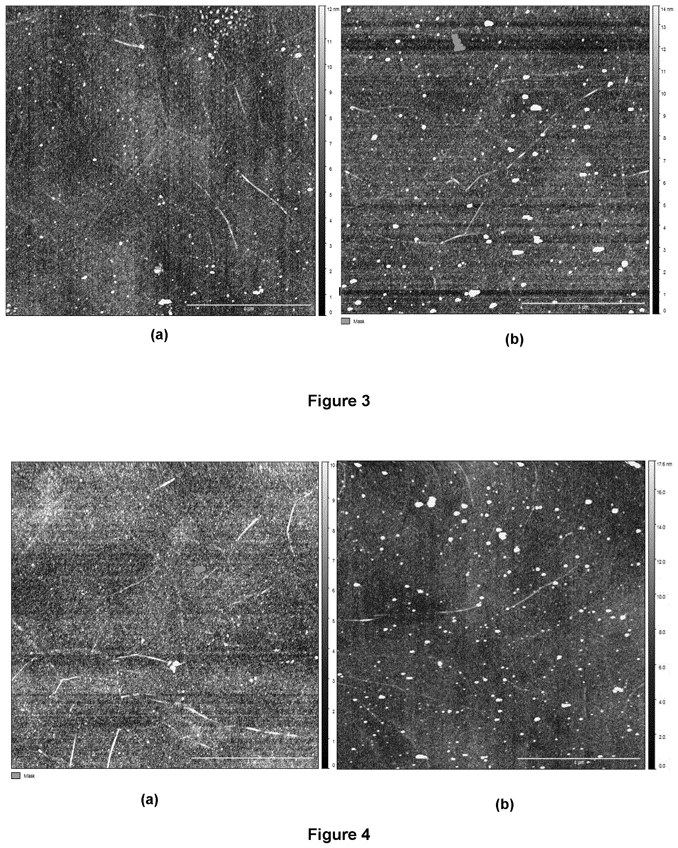

Chip 10 functionalized only with a 5mM solution of PBASE showed lower roughness (in both 10 x 10µm² and 2 x 2 µm² images) with respect to the bare substrate (chip 14). This could be explained due to a total coating of the graphene surface. In addition, chip 12 functionalized only with a 5mM solution of pyrene showed an excessively high roughness value, which could be explained due to pyrene stack creating a multilayer of aromatic rings when covering the graphene surface. This hypothesis could be supported by Figure 3(b) wherein small agglomerations are observed.

On the other hand, chips 1, 2, 11 and 13 showed an increased roughness with respect to the bare substrate (chip 14). This confirmed that the graphene surface was functionalized. The most favorable result was obtained for chip 2 (separately methodology - 1st PBASE then pyrene) for which the roughness remained similar to that of the bare substrate (chip 14). This could be explained by a uniform coating of graphene surface where PBASE molecules have been deposited first and later in the remaining gaps were filled by pyrenes molecules.

### Immobilization of antibodies on functionalized graphene

Immobilizations of antibodies in the surface of previously prepared functionalized graphene-based chips were performed. In particular, SARS-CoV-2 (2019 nCov) Spike S1 antibody (Ref. 410150-R007) was used as biomolecule. The graphene-based chips previously functionalized were incubated with an antibody concentration of 100 µg/ml during 4h at room temperature. Then, cleaning steps were carried out with PBS (phosphate-buffered saline) and DIW.

## Claims

1. A functionalized graphene structure comprising:
- a graphene surface;
- 1-pyrenebutanoic acid succinimidyl ester (PBASE) molecules;
- molecules of at least one type of polycyclic aromatic hydrocarbon (PAH) compounds; and
- biomolecules;
wherein both the molecules of PBASE and the molecules of at least one type of PAH compounds are non-covalently linked to the graphene surface, and wherein the biomolecules are linked to the PBASE molecules.

2. The functionalized graphene structure according to claim 1, wherein the at least one PAH compound has at least four aromatic rings.

3. The functionalized graphene according to any of claims 1 and 2, wherein the molecules of at least one type of PAH compound are selected from the group consisting of pyrene, anthracene, chrysene, corannulene, naphthalene, phenanthrene, triphenylene, benzopyrene, coronene, tetracene, pentacene, ovalene and mixtures thereof.

4. The functionalized graphene structure according to any of claims 1 to 3, wherein the molar ratio between the PBASE and the at least one PAH is between 2:5 and 5:2.

5. The functionalized graphene structure according to any of claims 1 to 4, wherein the biomolecules are antibodies.

6. Method for preparing the functionalized graphene structure according to any of claims to 1 to 5, **characterized in that** comprises the following steps:
a) incubating the PBASE molecules and the molecules of at least one type of PAH compounds over the graphene surface and washing the resulting graphene structure; and
b) incubating the biomolecules over the graphene surface of the graphene structure resulting from the previous step and washing the resulting functionalized graphene structure.

7. The method according to claim 6, wherein the PBASE molecules and the molecules of at least one type of PAH compounds in step (a) are incubated simultaneously over the graphene surface.

8. The method according to claim 6, wherein the PBASE molecules and the at least one type of PAH compounds in step (a) are incubated sequentially over the graphene surface.

9. The method according to any of claims 6 to 8, wherein the PBASE molecules are incubated at a concentration between 1.25 mM and 10 mM.

10. The method according to any of claims 6 to 9, wherein the molecules of at least one type of PHA compounds are incubated at a concentration between 0.1 mM and 5 mM.

11. A functionalized graphene structure obtainable by the method according to any of claims 7 to 10.

12. A Field-Effect Transistor (FET) biosensor, wherein said FET biosensor comprises a functionalized graphene structure according to any of claims 1 to 5 and 11.

13. An electronic device for biological sample analysis **characterized in that** it comprises a FET biosensor according to claim 12.

14. Method for electronic biological sample analysis comprising:
a) introducing a biological sample to be analyzed in a device according to claim 13 to bring the biological sample in contact with the functionalized graphene structure comprised in said device;
b) applying a voltage to the device; and
c) detecting a change of the conductive properties of the functionalized graphene structure resulting in a change of the electric signal of the said device.

15. Use of the functionalized graphene structure according to any of claims 1 to 5 and 11 as component in FET biosensors.
